Europäisches Patentamt

European Patent Office

Office européen des brevets

(11) Publication number: **0 133 355**
**B1**

(12) **EUROPEAN PATENT SPECIFICATION**

(45) Date of publication of patent specification: **05.12.90**

(21) Application number: **84305060.0**

(22) Date of filing: **25.07.84**

(51) Int. Cl.⁵: **B 29 C 55/30** // B29K67/00

(54) **Clear oriented polyester material.**

(30) Priority: **29.07.83 GB 8320533**

(43) Date of publication of application:
**20.02.85 Bulletin 85/08**

(45) Publication of the grant of the patent:
**05.12.90 Bulletin 90/49**

(84) Designated Contracting States:
**AT CH DE FR LI NL SE**

(56) References cited:
**EP-A-0 031 157**
**WO-A-80/02671**
**DE-A-2 032 614**
**FR-A-1 154 293**
**FR-A-2 516 855**
**GB-A- 720 274**
**US-A-4 059 668**
**US-A-4 348 350**

**PATENTS ABSTRACTS OF JAPAN, vol. 7, no.
159 (M-228) 13th July 1983, page 96 M 228; &
JP-A-58 67 411 (TEIJIN K.K.) 22-04-1983**

(73) Proprietor: **NATIONAL RESEARCH
DEVELOPMENT CORPORATION
101 Newington Causeway
London SE1 6BU (GB)**

(72) Inventor: **Ward, Ian MacMillan
2 Creskeld Drive Bramhope
Leeds West Yorkshire (GB)**
Inventor: **Selwood, Alan
Stray Holt Slingsby Walk
Harrogate North Yorkshire (GB)**

(74) Representative: **Hardisty, David Robert et al
BOULT, WADE & TENNANT 27 Furnival Street
London EC4A IPQ (GB)**

Courier Press, Leamington Spa, England.

## Description

This invention relates to oriented polyester material; more particularly, this invention relates to a process for the preparation of oriented polyester material and to oriented polyester material, for example tubing, produced thereby, especially such material of high transparency.

UK Patent No. 1311885 describes a process for reducing the cross-sectional area of an article of an orientable, thermoplastic polymeric material by drawing the article, at a temperature below its melting point, through a well-lubricated die of smaller cross-sectional area than that of the article, which process comprises forming an integral, preferentially oriented nose at one end of the article by a solid phase deformation process, such that the tensile strength of the nose exceeds the draw tension to be applied to the article, gripping the nose and drawing the article through the die so as to induce a substantial degree of molecular orientation throughout the drawn article.

This patent specification further discloses that the process is preferably performed by utilising the technique of hydrostatic extrusion; indeed, every example of the invention does use this technique. However, and as the specification rightly points out, at the date of that specification simple hydrostatic extrusion was limited by a deformation ratio "boundary" above which further increase in the ratio of the cross-sectional area of the polymer billet to that of the extruder die orifice had no useful effect; relaxation effects resulted in an extrudate exhibiting die swell limiting the actual deformation ratio and orientation. The specification discloses overcoming this disadvantage by applying to the issuing extrudate a deforming draw tension, the complete process often being referred to as draw assisted hydrostatic extrusion. UK Patent No. 1311885 discloses the application of its process to polyester materials such as polyethylene terephthalate and polybutylene terephthalate, including copolyester materials. A boundary deformation ratio of 3.5:1 and highest previously attainable modulus of $11.4 \times 10^5$ p.s.i. are disclosed for polyester materials; and this is exceeded by draw assisted hydrostatic extrusion, to provide values of 5:1 and $20.55 \times 10^5$ p.s.i. (14.2 Gpa) respectively. It is stated that a temperature from 100°C to 200°C may be conveniently used for extruding polyethylene terephthalate material.

It is however, found that oriented polyester material prepared by draw assisted hydrostatic extrusion at the elevated temperatures exemplified in UK Patent No. 1311885 lack clarity. This invention seeks to provide a process in which this disadvantage is obviated.

Accordingly, therefore in this invention, there is provided a die-drawing process for the production of oriented polyester tubular material, which process comprises providing a heated orientable thermoplastic workpiece of the polyester material at the entry side of a reducing die, and deforming the workpiece by a passage through the die in a solid phase at a nominal deformation ratio of at least 2:1, said deforming of the workpiece being effected by the application to the workpiece from the exit side of the die of a draw tension insufficient to cause tensile failure of the workpiece, and drawing the deformed polyester material through the die, said process being characterised by the workpiece being heated to a temperature of from 60° to 90°C prior to deformation, whereby the resulting tubular polyester material is transparent. Preferably the nominal deformation ratio is at least 3:1.

The polyester is one which is derivable from the reaction of at least one polyhydric alcohol, suitably a linear polyhydric alcohol, preferably a diol, with at least one polybasic acid, suitably a polycarboxylic acid. The alcohol is preferably an alicyclic or aliphatic such alcohol; for example, cyclohexane dimethanol or a linear $C_2$ to $C_6$ alkylene diol such as ethylene glycol, 1,3-propylene glycol or 1,4-butylene glycol, especially ethylene glycol. The acid is preferably an aromatic, alicyclic or aliphatic such acid; for example a mono or poly carbocyclic aromatic acid such as o-, m-. or terephthalic acid; 2,6-or 1,5-naphthalene dicarboxylic acid; or 1,2-dihydroxybenzoic acid, especially terephthalic acid. Examples of suitable polyesters include polyethylene 2,6-naphthalate, polyethylene 1,5-naphthalate, polytetramethylene 1,2-dihydroxybenzoate, polyethylene terephthalate, polybutylene terephthalate and copolyesters, especially of ethylene terephthalate.

The term "workpiece" as used herein includes bars, strips, rods, multifilaments, tubes, films (including laminates thereof) and other cross-sections of solid or hollow stock. The term includes both billets and other forms of stock of greater length; indeed, continuous stock, which may be formed as the process is performed, may be utilised: examples include a polymer sheathed continuous core such as a metal wire, or continuous polymer rod, film or filaments.

It has been found that oriented polyester material formed by the process of the present invention has extremely good clarity; and that it is essential that the workpiece be heated to a temperature as aforesaid in order to achieve this desirable property. The oriented polyester material can also exhibit enhanced young's modulus; resistance to creep; resistance to gas transport; and enhanced thermal conductivity in the machine direction.

Where clarity is not essential, certain of the mechanical properties (for example, Young's modulus) of the oriented polyester material may be further improved by incorporating a filler with the polyester to form the orientable thermoplastic workpiece. Examples of useful fibrous fillers include glass, asbestos, metal, carbon and ceramic whiskers, such as those formed from silicon carbide. Examples of useful laminar fillers include mica, talc and graphite flakes. Chalk and fly ash may also be included. The amount of filler which may advantageously be included depends on the nature of the filler, but up to 50% by weight, preferably less than 30%, especially less than 20%, may be incorporated.

It is preferred that the orientable thermoplastic workpiece is essentially unoriented before deformation: this is so that only intentional orientation is incurred with concomitant optimisation of properties.

The term "essentially unoriented" as used herein means that the workpiece has incurred no orientation other than that minor amount which might be induced during formation of the workpiece, for example during billet moulding or melt extrusion, or during any subsequent shaping thereof, for example by machining, prior to the performance of the deformation process of this invention.

Where it is not possible to use the polyester material as received as a workpiece, the workpiece may be formed within the batch or continuously. In either case care must be taken to ensure that the workpiece cools at an appropriate rate, for example by quenching (suitably by immersion into a water bath at ambient temperature) the orientable thermoplastic workpiece, so that the resulting, oriented polyester material will be clear and without defects.

In the more crystalline polyesters too slow a cooling rate may result in a workpiece having coarse crystallinity which is not removed on orienting in accordance with this invention. Too fast a cooling rate may, however, result in voiding. Where crystallinity is present it is preferred that this amounts to no more than 10% to 25% by volume, especially less than 10% by volume.

For workpieces of tubular profile, it is found that blow moulding is a satisfactory forming process. Where the tube thickness is greater than about 5 mm it may be necessary to coat the formed parison or precursor tube with further polyester material in at least one further forming step. Sheet may be formed by slitting tubular polyester material along the machine direction preferably after it has been oriented in accordance with this invention.

Prior to deformation, the orientable thermoplastic workpiece is desirably heated to a temperature from 60°C to 90°C, suitably from 65° to 85°, preferably from 70°C to 80°. This may be effected by passage of the workpiece through a heated sleeve or in the case of a billet, by heating it in a temperature controlled chamber upstream from the die, as exemplified hereinafter. It is desirable that the reducing die is also heated to within the above temperature range. It is also desirable that the oriented polyester material passes through a heated sleeve downstream from the die which is suitable heated to provide a temperature within the above range.

While being deformed in accordance with this invention, it may also be desirable to subject the polyester material to a dielectric field as disclosed in US 3364294 and EPA 84274.

The deformation may be effected by draw-assisted hydrostatic extrusion (by analogy with the process disclosed in UK 1311885) or die drawing, which latter Process is preferred.

In accordance, therefore, with a preferred aspect of this invention there is provided a process in accordance with this invention wherein the deformation is effected by applying to the workpiece from the exit side of the die a draw tension insufficient to cause tensile failure of the deforming workpiece; and drawing the workpiece through the die in the solid phase at a nominal deformation ratio of at least 3:1; for example at least 4:1.

It is feasible to use draw speeds greater than 1 cm min$^{-1}$ in the die drawing process of this invention; indeed, speeds of 50 cm min$^{-1}$ or more, such as 60 to 80 cm min$^{-1}$, are preferred.

Where hollow stock is being die drawn by the process of this invention it is essential to provide an appropriately dimensioned mandrel at the entry side of the die and protruding between the die lips to prevent collapse. In a continuous process this mandrel can suitably be of the "floating plug" type. In a batch process a fixed mandrel may be used.

A batch process may be converted to a continuous one by putting the upstream end of the deforming workpiece and downstream end of stock of the same cross-section both in contact with a hot, stainless steel plate; removing the plate and welding the two polymer surfaces. Preferably, such a weld should be at an angle of 45° or less to the axis of the stock.

The invention will now be further described, by way of example, with reference to the accompanying drawing and photographs, in which:

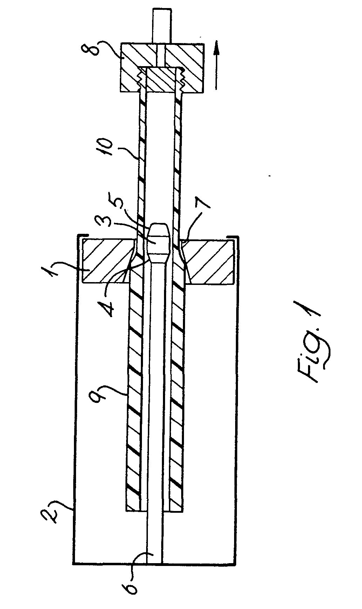

Figure 1 represents a schematic side elevation of the apparatus diametrically sectioned along the machine direction;

Figure 2 is a photograph of the wide angle X-ray diffraction pattern of the initial billet;

Figure 3 is a photograph of the wide angle X-ray diffraction pattern of the drawn product (radial X-radiation beam); and

Figure 4 is a photograph of the wide angle X-ray diffraction pattern of the drawn product (tangential X-radiation beam).

In the drawing, the apparatus consists of a reducing die 1 of 15° semi-angle and maximum reduction (or ideal deformation) ratio of 2.68 and, upstream thereof, an oven 2 from which a mandrel 3 (18 mm diameter and 10 mm length), having tapered leading and trailing edges 4, 5, is supported by rod 6 (16 mm diameter) in the die exit 7 which is 1 cm in length and without taper. Haul off jaws 8 are connected downstream from the reducing die to a winch (not shown).

In use, an initial billet 9 of polyethylene terephthalate (intrinsic viscosity determined in o-chlorophenol at 25°C of 0.75), produced by injection moulding to form a hollow cylindrical parison (26.0 mm O.D.; 19.7 mm I.D.), was machined at one end to 22 mm O.D. It was then inserted over the mandrel and rod into the oven, maintained at a temperature of 78°C, so that the machined end protruded through the die exit, the die also being maintained at 78°C. The machined end was next gripped in the haul-off jaws and load applied, slowly at first such that the plastic strain of the billet was progressively increased without causing tensile failure. After start-up a steady drawing speed of 65 cm min$^{-1}$ at a drawing load of 280 kg wt was established. The drawn tube 10 emerged with 17.9 mm O.D. and 15.8 mm I.D., corresponding to a deformation ratio of about 4. The resulting tube was completely transparent.

A three-point bend test of the intact tube was carried out between supports 40 cm apart. A small correction was made for the deformation of the tube during testing. The deflection was determined 10 seconds after application of the load, giving a value of 11.3 GPa for the 10 second isochronal axial modulus of the tube. An empirical test of the crushing strength was undertaken by compressing a 5 mm length in a vice. The outside diameter could be crushed until the vice jaws were only 5 mm apart without tube cracking, stress whitening or any other sign of failure being observed.

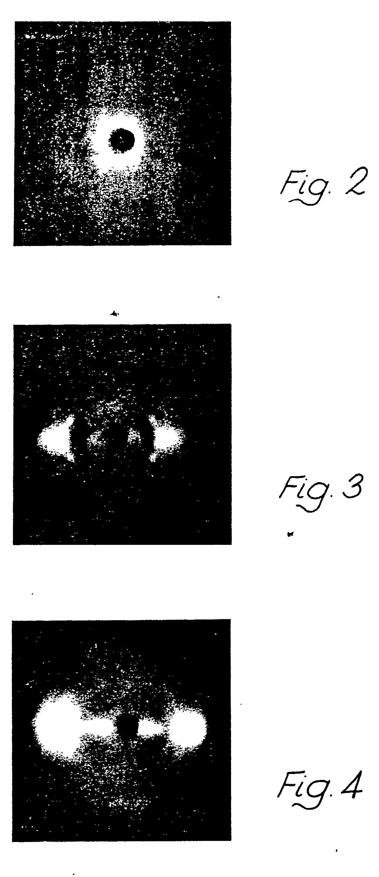

The injection moulding of the initial billet involved rapid cooling from the melt so that a completely amorphous structure would be expected. Figure 2 confirms that there was no crystalline structure.

Wide angle X-ray diffraction patterns were taken with the X-ray beam direction radially and tangentially respectively with respect to the tube axis. The patterns depicted in Figures 3 and 4, respectively, were very similar to those observed for one-way drawn polyethylene terephthalate films (see M. Kashiwagi, A. Cunningham, A.J. Manuel and I.M. Ward, Polymer *14*, 111 (1973); Figures 2G and 2H correspond to Figures 4 and 3 respectively). This suggests that the tube has an uniaxial planar structure where the molecular chain axes are preferentially oriented along the tube axis (the machine direction) and crystalline units are preferentially oriented with their 100 planes close to the tangential direction (i.e. the local plane of the tube) than in the radial direction.

## Claims

1. A die-drawing process for the production of oriented polyester tubular material, which process comprises providing a heated orientable thermoplastic workpiece of the polyester material at the entry side of a reducing die, and deforming the workpiece by a passage through the die in a solid phase at a nominal deformation ratio of at least 2:1, said deforming of the workpiece being effected by the application to the workpiece from the exit side of the die of a draw tension insufficient to cause tensile failure of the workpiece, and drawing the deformed polyester material through the die, said process being characterised by the workpiece being heated to a temperature of from 60° to 90°C prior to deformation, whereby the resulting tubular polyester material is transparent.

2. A process according to claim 1 wherein the polyester comprises residues of at least one polyhydric alcohol.

3. A process according to claim 2 wherein the polyester comprises residues of at least one linear $C_2$ to $C_6$ diol.

4. A process according to any preceding claim wherein the polyester comprises residues of at least one polycarboxylic acid.

5. A process according to claim 4 wherein the polyester comprises residues of at least one aromatic dicarboxylic acid.

6. A process according to any preceding claim wherein the orientable thermoplastic workpiece is essentially unoriented before deformation.

7. A process according to any preceding claim wherein the orientable thermoplastic workpiece is heated to a temperature from 70°C to 80°C.

8. A process according to any preceding claim wherein the reducing die is heated to a temperature from 60°C to 90°C.

9. A process according to any preceding claim wherein the oriented polyester material passes through a heated sleeve downstream from the die.

10. A process according to claim 9 wherein the heated sleeve provides a temperature from 60°C to 90°C.

11. A process according to any one of the preceding claims wherein the draw speed is greater than 50 cm min$^{-1}$.

12. A process according to any preceding claim wherein the upstream end of a discrete workpiece being deformed is welded to the downstream end of continuous stock of the same polyester and cross-section.

13. A process according to any one of claims 1 to 12 wherein the workpiece is continuously formed in situ and the process is operated continuously.

## Patentansprüche

1. Tiefziehverfahren zur Herstellung eines orientierten schlauchförmigen Polyestermaterials, wobei das Verfahren umfaßt die Zur-Verfügungstellung eines erhitzten orientierbaren thermoplastischen Werkstücks aus dem Polyestermaterial an der Eingangsseite einer Reduzierform und Verformen des Werkstückes durch Durchgang durch die Reduzierform in fester Phase mit einem nominalen Verformungsverhältnis von zumindest 2:1, wobei das Verformen des Werkstücks erreicht wird durch Einwirken einer Zugspannung auf das Werkstück, die nicht ausreicht, um durch den Zug auftretende Fehler an dem Werkstück hervorzurufen, an der Ausgangsseite der Reduzierform und Ziehen des verformten Polyestermaterials durch die Reduzierform, wobei das Verfahren dadurch gekennzeichnet ist, daß das Werkstück vor der Verformung auf eine Temperatur von 60° bis 90°C erhitzt wird, wodurch das entstehende schlauchförmige Polyestermaterial transparent wird.

2. Verfahren nach Anspruch 1, wobei der Polyester Reste von mindestens einem mehrwertigen Alkohol enthält.

3. Verfahren nach Anspruch 2, wobei der Polyester Rest von mindestens einem linearem $C_2$ bis $C_6$ Diol enthält.

4. Verfahren nach einem der vorangehenden Ansprüche, wobei der Polyester Reste von mindestens einer Polycarbonsäure enthält.

5. Verfahren nach Anspruch 4, wobei der Polyester Reste von mindestens einer aromatischen Dicarbonsäure enthält.

6. Verfahren nach einem der vorangehenden Ansprüche, wobei das orientierbare thermoplastische Werkstück im wesentlichen vor der Verformung nicht orientiert ist.

7. Verfahren nach einem der vorangehenden Ansprüche, wobei das orientierbare thermoplastische Werkstück auf eine Temperatur von 70° bis 80°C erhitzt wird.

8. Verfahren nach einem der vorangehenden Ansprüche, wobei die Reduzierform auf eine Temperatur von 60° bis 90°C erhitzt wird.

9. Verfahren nach einem der vorangehenden Ansprüche, wobei das orientierte Polyestermaterial unterhalb der Reduzierform durch eine erhitzte Hülse läuft.

10. Verfahren nach Anspruch 9, wobei die erhitzte Hülse eine Temperatur von 60° bis 90°C ergibt.

11. Verfahren nach einem der vorangehenden Ansprüche, wobei die Zuggeschwindigkeit größer als 50 cm min$^{-1}$ ist.

12. Verfahren nach einem der vorangehenden Ansprüche, wobei das obere Ende eines diskreten zu verformenden Werkstücks mit dem unteren Ende eines kontinuierlichen Vorrats des gleichen Polyesters mit dem gleichen Querschnitt verschweißt ist.

13. Verfahren nach einem der Ansprüche 1 bis 12, wobei das Werkstück kontinuierlich in Situ gebildet wird und das Verfahren kontinuierlich durchgeführt wird.

**Revendications**

1. Procédé d'étirage en filière pour la production d'un produit tubulaire en polyester orienté, lequel procédé consiste à procurer une pièce chauffée en polyester thermoplastique orientable du côté entrée d'une filière de réduction, à déformer la pièce en la faisant passer à travers la filière en phase solide à un taux de déformation nominal d'au moins 2:1, ladite pièce étant déformée en lui appliquant depuis le côté sortie de la filière un effort d'étirage insuffisant pour provoquer la rupture en traction de la pièce, et à étirer la pièce en polyester ainsi déformée à travers la filière, caractérisé en ce que la pièce est chauffée à une température de 60° à 90°C avant déformation, d'où il résulte que le produit tubulaire en polyester ainsi obtenu est transparent.

2. Procédé selon la revendication 1, dans lequel le polyester comprend des résidus d'au moins un polyalcool.

3. Procédé selon la revendication 2, dans lequel le polyester comprend des résidus d'au moins un diol linéaire à 2 à 6 atomes de carbone.

4. Procédé selon l'une des revendications précédentes, dans lequel le polyester comprend des résidus d'au moins un acide polycarboxylique.

5. Procédé selon la revendication 4, dans lequel le polyester comprend des résidus d'au moins un acide dicarboxylique aromatique.

6. Procédé selon l'une des revendications précédentes, dans lequel la pièce thermoplastique orientable est essentiellement non orientée avant déformation.

7. Procédé selon l'une des revendications précédentes, dans lequel la pièce thermoplastique orientable est chauffée à une température de 70° à 80°C.

8. Procédé selon l'une des revendications précédentes, dans lequel la filière de réduction est chauffée à une température de 60° à 90°C.

9. Procédé selon l'une des revendications précédentes, dans lequel le produit en polyester orienté traverse un manchon chauffé en aval de la filière.

10. Procédé selon la revendication 9, dans lequel le manchon chauffé procure une température de 60° à 90°C.

11. Procédé selon l'une quelconque des revendications précédentes, dans lequel la vitesse d'étirage est supérieure à 50 cm/min.

12. Procédé selon l'une des revendications précédentes, dans lequel l'extrémité amont d'une pièce individuelle en cours de déformation est soudée à l'extrémité aval d'une barre continue du même polyester et de la même section transversale.

13. Procédé selon l'une des revendications 1 à 12, dans lequel la pièce est continuellement formée in situ et le procédé est mis en oeuvre de façon continue.

Fig. 1

EP 0 133 355 B1

Fig. 2

Fig. 3

Fig. 4